(19) Europäisches Patentamt
European Patent Office
Office européen des brevets

(11) Veröffentlichungsnummer: **0 136 526 B1**

(12) # EUROPÄISCHE PATENTSCHRIFT

(45) Veröffentlichungstag der Patentschrift: **24.04.91**

(51) Int. Cl.$^5$: **C08G 73/10**, C08G 73/14

(21) Anmeldenummer: **84110170.2**

(22) Anmeldetag: **27.08.84**

Die Akte enthält technische Angaben, die nach dem Eingang der Anmeldung eingereicht wurden und die nicht in dieser Patentschrift enthalten sind.

(54) **Verfahren zur herstellung von Polyamidimiden.**

(30) Priorität: **06.09.83 DE 3332033**

(43) Veröffentlichungstag der Anmeldung:
**10.04.85 Patentblatt 85/15**

(45) Bekanntmachung des Hinweises auf die Patenterteilung:
**24.04.91 Patentblatt 91/17**

(84) Benannte Vertragsstaaten:
**CH DE FR GB IT LI**

(56) Entgegenhaltungen:
**EP-A- 0 104 417**
**DE-A- 2 947 117**
**DE-B- 1 770 202**
**FR-A- 2 503 171**
**DE-A- 2 542 706**
**DE-A- 3 240 934**
**DE-B- 1 956 512**

(73) Patentinhaber: **BAYER AG**
**W-5090 Leverkusen 1 Bayerwerk(DE)**

(72) Erfinder: **Zecher, Wilfried, Dr.**
**Treptowerstrasse 6**
**W-5090 Leverkusen 1(DE)**
Erfinder: **Dhein, Rolf, Dr.**
**Deswatinestrasse 30**
**W-4150 Krefeld 1(DE)**
Erfinder: **Reinking, Klaus, Dr.**
**Robert-Stolz-Strasse 16b**
**W-5632 Wermelskirchen 1(DE)**

**EP 0 136 526 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft die Herstellung von Polyamidimiden

Es ist bereits bekannt, daß man aliphatisch-aromatische Polyamidimide erhält, wenn Polyisocyanate mit cyclischen Polycarbonsäureanhydriden und Lactamen (DAS 1 770 202) oder Polyamiden (DAS 1 956 512) zur Umsetzung gebracht werden. Die Reaktionsprodukte zeichnen sich durch hohe Erweichungstemperaturen und gute Elastizitätswerte aus und finden als hochtemperaturbeständige Beschichtungen, z.B. auf dem Elektroisolierlack-Sektor, Verwendung.

Es wurde nun gefunden, daß Polyamidimide, die bei der Kondensation von organischen Polyisocyanaten wie aliphatischen, aliphatisch-aromatischen und aromatischen Diisocyanaten mit cyclischen Polycarbonsäureanhydriden und Lactamen oder Polyamiden bei Temperaturen von 0 - 400° C und in einem Lösungsmittel erhalten werden, Thermoplaste mit ausgezeichneten Eigenschaften sind, wenn diese Polymere noch 0,1 - 20 Gew.-%, vorzugsweise0,2 bis 15 Gew.-%, besonders bevorzugt 1 bis 10 Gew.-%, eines Lactams der allgemeinen Formel

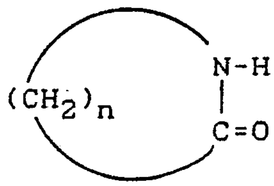 (I)

in welcher

n für die Zahl 4, 5, 6, 7, 8, 9, 10, 11, 12, 13, 14, 15, 16, 17 oder 18 steht,

enthalten.

Gegenstand der Erfindung ist ein Verfahren zur Herstellung von Kresol-löslichen Polymeren aus Polyisocyanaten, cyclischen Polycarbonsäureanhydriden und Lactamen oder Polyamiden, dadurch gekennzeichnet, daß die Polymere 0,1 bis 20 Gew.-% eines Lactams oder deren Mischungen der allgemeinen Formel (I)

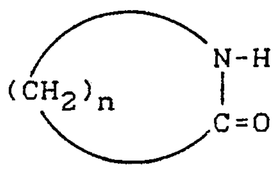 (I)

in der

n für eine ganze Zahl von 4 bis 18 steht,

enthalten und daß das Polymere in einer ersten Stufe nach einem bekannten Verfahren in einem Lösungsmittel hergestellt und dann in einem Eindampfextruder bei Temperaturen von 240 bis 400° C, gegebenenfalls unter Vakuum aufkonzentriert und auskondensiert werden, mit der Maßgabe, daß die Herstellung oder Aufarbeitung nicht in Gegenwart von 0,2 bis 15 Gew.-% eines oder eines Gemisches einfach oder mehrfach mit Alkylresten mit 1 bis 20 C-Atomen und/oder mit Cycloalkylresten und/oder Arylresten mit 6 bis 12 C-Atomen substituierter Phenole erfolgt, wobei bei alleinigem Vorliegen von Alkyl Substituenten diese mindestens 2 C-Atome haben müssen.

Bevorzugt steht in Formel (I) n für die Zahl n = 5 (Caprolactam), n = 11 (Azacyclotridecam-2-on, Laurinlactam), für n = 10 und n = 12, besonders bevorzugt für die Zahl n = 10, n = 11, oder deren Mischungen, besonders bevorzugt deren Mischungen mit Caprolactam.

Es wurde weiterhin gefunden, daß diese Polyamidimide, z.B. in Lösungsmitteln hergestellt und dann in einem Eindampfextruder bei Temperaturen von 250 bis 400° C, gegebenenfalls unter Vakuum, aufkonzentriert werden können.

Diese Reaktionsprodukte zeichnen sich durch gute mechanische Werte wie Schlagzähigkeit, Zugfestigkeit, E-Moduli und Wärmeformbeständigkeit aus. Es ist überraschend, daß die erfindungsgemäßen Polyamidimide bei den hohen Temperaturen die für das Extrudieren und den Spritzguß von Polyimiden notwendig sind, verarbeitet werden können. Im allgemeinen können bei Imiden für diesen Anwendungsbereich als Amino-Komponente nur thermisch sehr stabile Reste, z.B. 4,4'-substituierte Diphenylether eingesetzt werden. Es ist weiterhin überraschend, daß die erfindungsgemäßen Polymeren unter diesen Bedingungen, insbesondere bei der Aufkonzentration im Extruder, nicht verspröden und unschmelzbar werden, wie dies

bei Reaktionsprodukten aus Polyisocyanaten und cyclischen Polycarbonsäureanhydriden zu beobachten ist.

Erfindungsgemäß können vorzugsweise Polyisocyanate eingesetzt werden, wie sie beispielsweise in der DE-OS 1 770 202 beschrieben sind.

Besonders bevorzugt werden phosgenierte Kondensate aus Anilin und Formaldehyd mit Polyphenylen-methylen-struktur, technische Gemische aus Toluylendiisocyanaten, m-Phenylendiisocyanat und die symmetrischen Verbindungen 4,4'-Diisocyanato-diphenylmethan, 4,4'-Diisocyanato-diphenylether, Napthylen-(1,5)-diisocyanat, p-Phenylendiisocyanat, 4,4'-Diisocyanato-diphenyl-dimethylmethan, analoge hydro-aromatische Diisocyanate wie 4,4'-Diisocyanato-dicyclohexylmethan sowie aliphatische Diisocyanate mit 2 - 12-C-Atomen wie Hexamethylendiisocyanat, von Isophoron abgeleitete Diisocyanate und deren Gemische.

An Stelle der Isocyanate können auch Verbindungen eingesetzt werden, die unter den Reaktionsbedingungen als Isocyanatereagieren, vorzugsweise die Additionsverbindungen von Phenolen und Lactamen, z.B. von Phenol, technischen Kresolgemischen und Caprolactam oder von Gemischen aus den den Isocyanaten entsprechenden Aminen und aliphatischen und aromatischen Kohlensäureestern, z.B. Kohlensäurediethylester, Kohlensäurediphenylester und Ethylencarbonat, die auch bereits partiell miteinander umgesetzt sein können, oder auch Polycarbondiimide. Zur Regulierung des Molekulargewichts können auch monofunktionelle Isocyanate, wie z.B. Phenylisocyanat, Tolylisocyanat, Cyclohexylisocyanat, Stearylisocyanat, ω,ω,ω-Trifluorethylisocyanat und 3,5-Trifluormethyl-phenylisocyanat oder die entsprechenden Amine eingesetzt werden.

Als erfindungsgemäß verwendbare Polycarbonsäureanhydride können Verbindungen verwendet werden, wie sie in DE-OS 170 202 und DE-OS 2 542 706 beschrieben werden, vorzugsweise Polycarbonsäureanhydride der allgemeinen Formel (II)

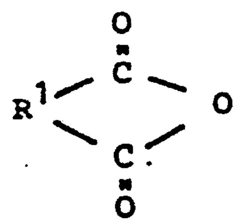

(II)

in welcher

$R^1$ einen gegebenenfalls substituierten aliphatischen $C_2$-$C_{20}$-Rest, cycloaliphatischen $C_5$-$C_{10}$-Rest, einen aliphatisch-aromatischen Rest mit 1 bis 10 C-Atomen im aliphatischen Teil und 6 bis 10 C-Atomen im aromatischen Teil oder einen aromatischen Rest mit 6 bis 10 C-Atomen bedeutet, der neben der cyclischen Anhydridgruppe mindestens noch eine weitere cyclische Anhydridgruppe oder eine Carboxylgruppe trägt,

bedeutet.

Als Beispiele seien Butantetracarbonsäuredianhydrid, Cyclopentantetracarbonsäuredianhydrid, Pyromellitsäuredianhydrid, Benzophenontetracarbonsäuredianhydrid und besonders bevorzugt Trimellitsäureanhydrid aufgeführt.

Anstelle der Carbonsäureanhydride können auch Derivate wie die Alkylester oder Phenylester oder die Polycarbonsäuren selbst eingesetzt werden, die im Verlauf der Reaktion in die Säureanhydride übergehen.

Zur Regulierung des Molekulargewichts werden unter den Reaktionsbedingungen als monofunktionell reagierende Carbonsäuren wie z.B. Phthalsäure oder deren Anhydrid, Benzoesäure oder Palmitinsäure eingesetzt, die weiterhin mit Alkyl oder Halogen wie Fluor oder Chlor substituiert sein können.

Erfindungsgemäß verwendbare Lactame sind beispielsweise solche der Formel III

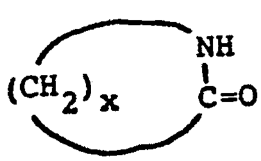

(III)

in welcher x eine ganze Zahl von 2 bis 20 bedeutet.

Vorzugsweise wird Caprolactam eingesetzt.

Anstelle oder in Kombination mit den Lactamen können Polyamide eingesetzt werden, wie sie in DE-AS 1 956 512 beschrieben werden, z.B. Polycapronamid (Nylon 6), Polydodecansäureamid und Polyamide aus Dicarbonsäuren wie z.B. Adipinsäure, Sebacinsäure, Oxalsäure, Dibutylmalonsäure, Isophthalsäure und

Terephthalsäure und Diaminen wie Ethylendiamin, Hexamethyldiamin, Decamethylendiaminen und m- und p-Phenylendiamin. Bevorzugt verwendet werden Polycapronamid (Nylon 6) und Polyhexamethylenadipamid (Nylon 66).

Die Lactame, die in den erfindungsgemäß herstellbaren Polyamidimide einzeln oder in Mischungen zu 0,2 bis 15 Gew.-% enthalten sein sollen, entsprechend der allgemeinen Formel

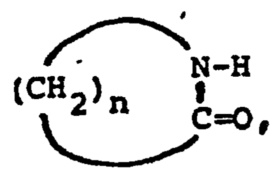

(I),

in der n eine ganze Zahl von 4 bis 18 bedeutet.

Vorzugsweise wird Caprolactam und Laurinlactam (Azacyclotridecan-2-on) verwendet, vorzugsweise als Gemisch.

Die Herstellung der erfindungsgemäß hergestellten Polymeren kann in Lösungsmitteln erfolgen, wie dies in DE-AS 1 770 202 beschrieben wird. Bevorzugt werden als Lösungsmittel Phenole wie Phenol und technische Gemische aus o-, m- und p-Kresolen verwendet.

Zur Herstellung der erfindungsgemäßen Imid-Thermoplaste werden die Reaktionskomponenten mit Lösungsmittel einige Minuten bis zu mehreren Stunden bei Temperaturen von 0 - 400° C gehalten. Der Verlauf der Reaktion läßt sich beispielsweise über die Gasentwicklung, den Anstieg der Viskosität und die IR-Spektren verfolgen.

Es kann bei der Herstellung des Polyamidimids dasselbe Lactam verwendet werden wie das Lactam, das im Endprodukt enthalten sein soll. In diesem Fall kann, anstatt dasselbe Lactam zusätzlich nachzugeben, bei der Herstellung und Aufkonzentrierung auch so verfahren werden, daß die erfindungsgemäß notwendige Menge im Reaktionsprodukt enthalten bleibt, z.B. durch entsprechende Wahl der Lactam-Menge, der Reaktionszeiten, Temperaturen und des Drucks beim Aufkonzentrieren.

Die Zugabe der erfindungsgemäßen zusätzlichen Lactame mit $n \geqq 4$ kann bereits zu Beginn oder im Verlaufe der Reaktion erfolgen. Dabei ist darauf zu achten, daß die zusätzlichen Lactame eventuell im Überschuß zu dem angestrebten Endgehalt eingesetzt werden müssen, da partieller Einbau in das Polymere erfolgen kann.
Eine bevorzugte Ausführungsform, die diese Schwierigkeiten vermeidet, besteht darin, die Lactame erst nach Beendigung der Kondensation oder, besonders bevorzugt, in der Phase vor der Aufkonzentration und Nachkondensation im Extruder zuzugeben.

Es ist zuweilen vorteilhaft, die Herstellungsreaktion in mehreren Stufen durchzuführen oder die einzelnen Komponenten in unterschiedlicher Reihenfolge oder bei verschiedenen Temperaturen zuzugeben. So kann das Polymere in einem phenolischen Lösungsmittel hergestellt, dann aus der Lösung mit einem Nichtlöser wie z.B. Methanol gefällt und gegebenenfalls noch auf einem Extruder nachkondensiert werden. Eine bevorzugte Ausführungsform besteht darin, das Polymere in einem Lösungsmittel herzustellen, gegebenenfalls bereits im Kessel zu einer noch fließfähigen Lösung oder einem Schmelzharz aufzukonzentrieren, das Lactam mit n = 4 einzutragen und dann den restlichen Konzentrationsvorgang unter Nachkondensation, in einem Eindampfextruder unter Vakuum oder Stickstoff bei Temperaturen von 240 - 400° C, vorzugsweise von 280 - 340° C, auszuführen.

In einer besonderen Ausführungsform wird beispielsweise bei der Herstellung des Polymeren in einem phenolischem Lösungsmittel (z.B. Phenol/technisches Kresol-Gemisch) nach der Polymerisation die Reaktionslösung für zusätzlich 0,5 bis 10 Stunden, vorzugsweise 1 bis 6 Stunden bei einer Temperatur von 200 bis 250° C, vorzugsweise 210 bis 220° C, gehalten.

Diese Temperaturen können durch partielle Verdampfung des Lösungsmittels oder Anwendung von Druck bis zu etwa 5 bar erreicht werden.

Im allgemeinen werden pro Val Isocyanat ein Val Carbonsäure oder cyclisches Carbonsäureanhydrid und pro Val Carbonsäureanhydrid 0,5 - 2 Val Lactam oder Polyamid zur Umsetzung gebracht, doch sind auch weitgehende Abweichungen von diesen Mengenverhältnissen möglich. Zuzüglich zu dieser Lactam- oder Polyamid-Menge werden noch 0,2 bis 15 Gew.-% vorzugsweise 1 - 8 Gew.-%, eines Lactams mit n = 4 in der beschriebenen Weise eingesetzt. Eine weitere mögliche Ausführungsform besteht darin, überschüssiges Isocyanat mit Di- oder Tricarbonsäuren wie z.B. Adipinsäure Terephthalsäure, Isophthalsäure oder Trimesinsäure und überschüssige Carbonsäure mit polyfunktionellen Alkoholen, wie z.B. Ethylenglykol, Neopentylglykol, Hexandiol, Trimethylolpropan, Trishydroxyethylisocyanurat, Trishydroxyethylurazol und Polyestern mit endständigen Hydroxigruppen zur Reaktion zu bringen.

Die erfindungsgemäße Herstellung der Polymeren kann durch Katalysatoren beeinflußt werden, Z.B. durch Amine wie Triethylamin, 1,4-Diazobicyclo-(2,2,2)-octan, N-Ethylmorpholin, N-Methylimidazol und 2-Methylimidazol, durch anorganische und organische Metallverbindungen, insbesondere Verbindungen des Eisens, Bleis, Zinks, Zinns, Kupfers, Kobalts und Titans wie Eisen (III)-chlorid, Kobaltacetat, Bleioxid, Bleiacetat, Zinnoctoat, Dibutyl-zinn-dilaurat, Kupferacetylacetonat, Titantetrabutylat, Alkali-phenolate und Natriumcyanid und durch Phosphorverbindungen wie Trialkylphosphin und Methylphospholinoxid.

Die erfindungsgemäß hergestellten Polyamidimide zeichnen sich durch besondere Zugfestigkeit, E-Moduli und Wärmeformbeständigkeit aus. Ihre Eigenschaften können für die verschiedenen Anwendungsgebiete durch Änderung der stöchiometrischen Verhältnisse, des Kondensationsgrades und durch Zumischung von nieder- und hochmolekularen Komponenten wie Füllstoffen, Pigmenten, Alterungsschutzmitteln, Gleitmitteln, Weichmachern und weiteren Polymeren variiert werden.

Beispiel 1

In 1875 g Phenol/Kresol (1 : 1) werden 565 g Caprolactam, 87 g eines technischen Gemisches aus 80 Teilen 2,4- und 20 Teilen 2,6-Toluylendiisocyanat, 1125 g 4,4'-Diisocyanatdiphenylmethan und 960 g Trimellitsäreanhydrid 2 Stunden bei 170 °C, 2 Stunden bei 190 °C und 4 Stunden bei 205 °C gerührt. Dann werden 1300 g des Lösungsmittelgemisches unter Vakuum abdestilliert und der Rückstand noch 1 Stunde bei 210 °C gerührt. Man erhält das Polyamidimid als ca. 80 %ige Schmelze. Die Viskosität $\eta^{25}$, gemessen an einer 15 %igen Lösung in Kresol, beträgt 670 mPas.

In die Schmelze werden 69 g Dodecanlactam eingerührt. Man erhält beim Erkalten ein sprödes Harz, das zerkleinert wird und mit einem Welding-Eindampfextruder bei einer maximalen Manteltemperatur von 300 °C und einem Druck von 135 mbar eingedampft und auskondensiert wird. Das Kondensationsprodukt ist ein hellbraunes, transparentes Harz mit einer relativen Viskosität, gemessen an einer 1 %igen Lösung in Kresol bei 25 °C, von $\eta$ = 2,10.

Das so hergestellte Polymere wird im Spritzguß bei Temperaturen um 300 °C verarbeitet. Man erhält Prüfkörper mit einer Kerbschlagzähigkeit von 8 kJ/m², einer Streckspannung von 116 mPa, einem Zug-E-Modul von 3510 MPa und einer Vicat-Erweichungstemperatur von 176 °C.

Beispiel 2

5000 g eines entsprechend Beispiel 1 hergestellten 80 %igen Polyamidimid-Harzes werden aufgeschmolzen und mit 240 g 12-Dodecanlactam versetzt. Die homogenisierte Schmelze wird mit einem Welding-Eindampfextruder bei einer maximalen Manteltemperatur von 310 °C und einem Druck von 165 mbar aufkonzentriert. Man erhält ein transparentes, braunes Harz mit einer relativen Viskosität, gemessen an einer einprozentigen Lösung in Kresol bei 25 °C, von $\eta$ = 1,86.

Die Verformung im Spritzguß bei Temperaturen um 300 °C ergibt Prüfkörper mit einer Schlagzähigkeit von 82 kJ/m², einer Reißfestigkeit von 105 MPa, einem Zug-E-Modul von 3480 MPa und einer Vicat-Erweichungstemperatur von 174 °C.

Beispiel 3

5000 g eines entsprechend Beispiel 1 hergestellten 80%igen Polyamidimid-Harzes werden in der Schmelze mit 80 g Dodecanlactam und 40 g eines technischen Gemisches von Nonylphenolen versetzt. Die Schmelze erstarrt beim Erkalten zu einem spröden Harz, das zerkleinert und mit einem Welding-Eindampfextruder bei einer maximalen Manteltemperatur von 310 °C und einem Druck von 90 mbar aufkonzentriert wird. Man erhält das Imid-Polymere als transparentes, elastisches Harz mit einer relativen Viskosität von $\eta$ = 2,40.

Beispiel 4

In 640 g Phenol/Kresol (1 :1) werden 113 g Caprolactam, 200 g 4,4'-Diisocyanatodiphenylmethan, 52,5 g Trimellitsäureanhydrid und 52,5 g Bis-[4-isocyanato-cyclohexyl]-methan eingetragen. Das Reaktionsgemisch wird 2 Stunden bei 170 °C, 2 Stunden bei 190 °C und 4 Stunden unter leichtem Rückfluß bei ca.

200 °C gerührt. Anschließend werden im Vakuum 520 g des Lösungsmittelgemisches abdestilliert. Der Rückstand wird noch 1 Stunde bei 215 °C nachkondensiert. Man erhält eine ca. 80%ige Schmelze des Polyamidimid-Harzes. Die Viskosität $\eta^{25}$ einer 15 %igen Lösung in Kresol beträgt 720 mPas. In die Schmelze werden 15 g ω-Dodecanlactam eingerührt. Eine Probe des so hergestellten Polymeren wird im Stickstoffstrom bei 250 °C und 300 °C eingedampft und ergibt ein transparentes, schmelzbares Harz mit einer relativen Viskosität $\eta$ = 1,73, gemessen bei 25 °C an einer 1 %igen Lösung in Kresol.

Beispiel 5

In 210 g eines technischen Kresolgemisches werden 33,9 g Nylon 66 (Polyhexamethylenadipamid) gelöst. Dann werden 112,5 g 4,4'-Diisocyanatodiphenylmethan, 8,7 g 2,4-Toluylendiisocyanat und 96 g Trimellitsäureanhydrid eingetragen und das Reaktionsgemisch 2 Stunden bei 170 °C, 2 Stunden bei 190 °C und 4 Stunden bei 205 °C gerührt. Anschließend werden 140 g des Lösungsmittelgemisches unter Vakuum abdestilliert. Dann wird zur weiteren Kondensation noch eine Stunde bei 215 °C gerührt. Man erhält eine hellbraune, klare Schmelze des Polyamidimid-Harzes mit einem Feststoffgehalt von ca. 75 Gew.-%. Die Viskosität einer 15 %igen Lösung in Kresol $\eta^{25}$ beträgt 580 mPas. In 100 g der so hergestellten Schmelze werden 3,8 g ω-Dodecanlactam eingetragen. Das Eindampfen im Stickstoffstrom bei 250 und 300 °C ergibt ein transparentes, schmelzbares Harz mit einer relativen Viskosität $\eta$ = 1,82.

Beispiel 6

In 3000 g Phenol/Kresol (1 : 1) werden bei Raumtemperatur 904 g Caprolactam und dann bei 120 °C 1780 g 4,4'-Diisocyanatodiphenylmethan, 139 g eines technischen Gemisches aus 80 % 2,4- und 20 % 2,6-Toluylendiisocyanat, 19 g Phenylisocyanat und 1536 g Trimellitsäureanhydrid eingetragen. Dann wird 2 Stunden bei 170 °C, 2 Stunden bei 190 °C, und 4 Stunden bei 205 °C gerührt. Anschließend werden im Vakuum 1780 g des Lösungsmittelgemisches abdestilliert und der Rückstand noch 1 Stunde bei 215 °C gehalten. Dann werden 110 g ω-Dodecanlactam eingetragen. Man erhält beim Erkalten ein klares, sprödes Harz mit einem Festgehalt von ca. 75 Gew.-%. Die Viskosität einer 15 %igen Lösung in Kresol beträgt $\eta^{25}$ = 570 mPas.

Das Imid-Harz wird mit einer ZSK-Schnecke bei einer maximalen Manteltemperatur von 320 °C und einem Druck von 400 mbar aufkonzentriert. Man erhält ein klares, elastisches Polymeres mit einer relativen Viskosität, gemessen an einer 1 %igen Lösung in Kresol bei 25 °C, $\eta$ = 2,16.

## Ansprüche

1. Verfahren zur Herstellung von Kresol-löslichen Polymeren aus Polyisocyanaten, cyclischen Polycarbonsäureanhydriden und Lactamen oder Polyamiden, dadurch gekennzeichnet, daß die Polymere 0,1 bis 20 Gew.-% eines Lactams oder deren Mischungen der allgemeinen Formel (I)

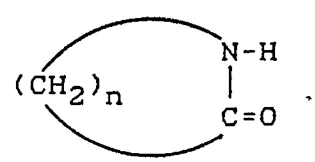

(I)

in der

n für eine ganze Zahl von 4 bis 18 steht,

enthalten und daß das Polymere in einer ersten Stufe nach einem bekannten Verfahren in einem Lösungsmittel hergestellt und dann in einem Eindampfextruder bei Temperaturen von 240 bis 400 °C unter Vakuum oder Stickstoff aufkonzentriert und auskondensiert werden, mit der Maßgabe, daß die Herstellung oder Aufarbeitung nicht in Gegenwart von 0,2 bis 15 Gew.-% eines oder eines Gemisches einfach oder mehrfach mit Alkylresten mit 1 bis 20 C-Atomen und/oder mit Cycloalkylresten und/oder Arylresten mit 6 bis 12 C-Atomen substituierter Phenole erfolgt, wobei bei alleinigem Vorliegen von Alkyl Substituenten diese mindestens 2 C-Atome

haben müssen.

2. Verfahren nach Anspruch 1, dadurch gekennzeichnet, daß bei der Herstellung der Polymeren in einem phenolischen Lösungsmittel nach der Polymerisation die Reaktionslösung für zusätzlich 0,5 bis 10 Stunden bei einer Temperatur von 200 bis 250 °C gehalten wird.

3. Verfahren nach Anspruch 1, dadurch gekennzeichnet, daß als Polycarbonsäureanhydrid Trimellitsäureanhydrid verwendet wird.

4. Verfahren nach Anspruch 1, dadurch gekennzeichnet, daß in Formel (I) n = 5, n = 10, n = 11 und n = 12 ist.

## Claims

1. A process for the production of cresol-soluble polymers from polyisocyanates, cyclic polycarboxylic anhydrides and lactams or polyamides, characterized in that the polymers contain 0.1 to 20% by weight of a lactam or mixtures thereof corresponding to formula (I)

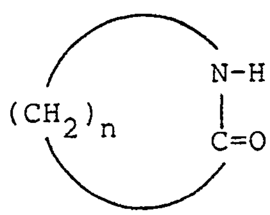

(I)

in which
n is an integer of 4 to 18,
and in that the polymers are prepared in a first step carried out in known manner in a solvent and are then concentrated and fully condensed in an evaporation extruder at temperatures of 240 to 400 °C in vacuo or under nitrogen, with the proviso that neither preparation nor working up is carried out in the presence of 0.2 to 15% by weight of a phenol or mixture of phenols substituted one or more times by alkyl radicals containing 1 to 20 carbon atoms and/or by cycloalkyl radicals and/or aryl radicals containing 6 to 12 carbon atoms; where only alkyl substituents are present, they must contain at least 2 carbon atoms.

2. A process as claimed in claim 1, characterized in that, where the polymers are prepared in a phenolic solvent, the reaction solution is kept at a temperature of 200 to 250 °C for another 0.5 to 10 hours after polymerization.

3. A process as claimed in claim 1, characterized in that trimellitic anhydride is used as the polycarboxylic anhydride.

4. A process as claimed in claim 1, characterized in that, in formula (I), n = 5, n = 10, n = 11 and n = 12.

## Revendications

1. Procédé de production de polymères solubles dans le crésol, à partir de polyisocyanates, d'anhydrides d'acides polycarboxyliques cycliques et de lactames ou de polyamides, caractérisé en ce que les polymères contiennent 0,1 à 20 % en poids d'un lactame ou de mélanges de lactames de formule générale (I)

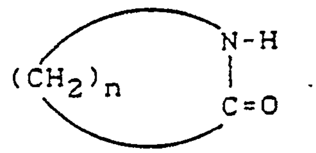

(I)

dans laquelle

n est un nombre entier de 4 à 18,

et en ce que le polymère est produit dans une première étape par des procédés connus dans un solvant, puis concentré sous vide ou sous azote et condensé dans une extrudeuse à évaporation à des températures de 240 à 400 °C, sous réserve que la production ou le traitement ne soit pas effectué en présence de 0,2 à 15 % en poids d'un phénol ou d'un mélange de phénols portant un ou plusieurs substituants constitués de restes alkyle ayant 1 à 20 atomes de carbone et/ou de restes cycloalkyle et/ou de restes aryle ayant 6 à 12 atomes de carbone, et lorsque des substituants alkyle sont seuls présents, ces substituants doivent avoir au moins 2 atomes de carbone.

**2.** Procédé suivant la revendication 1, caractérisé en ce que lorsqu'on prépare les polymères dans un solvant phénolique, la solution réactionnelle, après la polymérisation, est maintenue pendant encore 0,5 à 10 heures à une température de 200 à 250 °C.

**3.** Procédé suivant la revendication 1, caractérisé en ce qu'on utilise comme anhydride d'acide polycarboxylique l'anhydride d'acide trimellitique.

**4.** Procédé suivant la revendication 1, caractérisé en ce que, dans la formule (I), n a les valeurs 5, 10, 11 et 12.